# DEMANDE DE BREVET EUROPEEN

(11) **EP 3 002 443 A1**
(43) Date de publication de la demande: **06.04.2016**
(21) Numéro de dépôt: 15178633.2
(22) Date de dépôt: 28.07.2015
(51) Int. Cl.: F02M 31/20, F02M 35/104, F02B 29/04, F02M 35/10, F02B 37/00, F01P 3/18, B60H 1/00

(54) **MODULE D'ADMISSION D'AIR D'UN MOTEUR A COMBUSTION INTERNE DE VEHICULE AUTOMOBILE**

(30) Priorité: 22.09.2014 FR 1458927
(71) Demandeur: Peugeot Citroen Automobiles S.A., 78140 Vélizy Villacoublay (FR)
(72) Inventeur: LEFEBVRE, Ludovic, 92700 COLOMBES (FR)

(57) **Abrégé**

L'invention porte principalement sur un module d'admission d'air d'un moteur à combustion interne (1) de véhicule automobile comportant au moins deux étages de suralimentation (15, 15') en air dudit moteur à combustion interne (1), caractérisé en ce qu'il comporte en outre:
- des moyens (23) assurant un premier échange thermique avec l'air de suralimentation via un circuit caloporteur haute température (2) du moteur à combustion interne (1) de manière à faire passer l'air de suralimentation d'une température supérieure ou égale à 150 degrés Celsius à une température située dans une première plage de valeurs de températures;
- des moyens (24) assurant un deuxième échange thermique avec l'air de suralimentation via un circuit caloporteur basse température (19) de manière à réduire la température de l'air de suralimentation dans une deuxième plage de valeurs de températures, et
- des moyens (25) assurant un troisième échange thermique de manière à réduire la température de l'air de suralimentation dans une troisième plage de valeurs de température, avant son admission dans les chambres de combustion du moteur à combustion interne (1).

## Description

La présente invention porte sur un module d'admission d'air d'un moteur à combustion interne de véhicule automobile, ainsi qu'un dispositif d'échange de chaleur disposé dans un tel module d'admission d'air, et un système de transferts thermiques comprenant un tel module d'admission d'air.

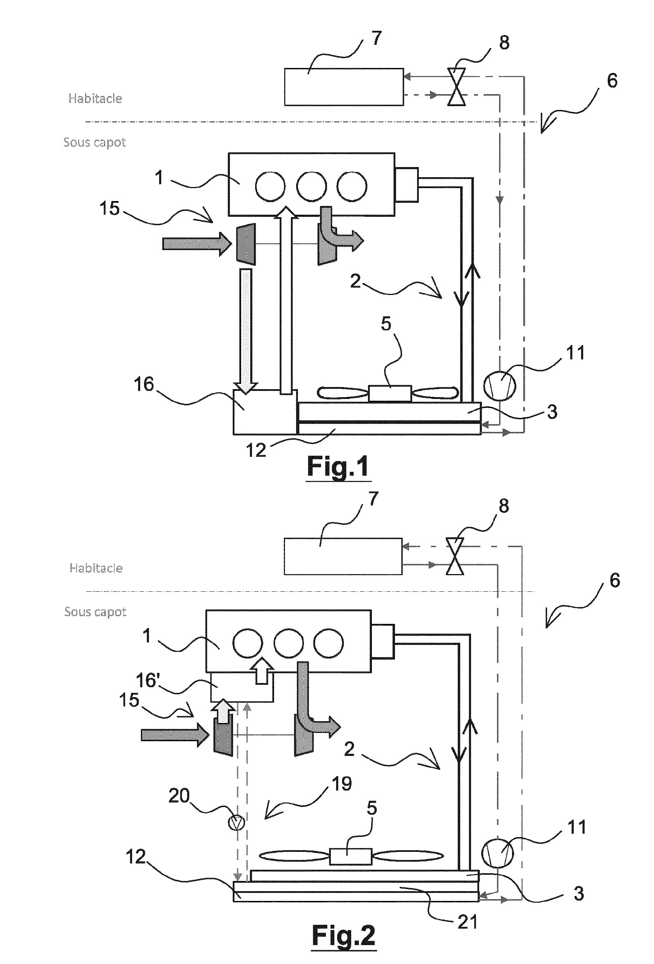

Les véhicules automobiles comportent généralement des échangeurs de chaleur destinés à refroidir ou réchauffer les fluides nécessaires à leur fonctionnement. Comme cela est visible sur la figure 1, ces véhicules ayant un moteur à combustion interne 1 comportent ainsi différents échangeurs de chaleur associés notamment à différents circuits de refroidissement, en particulier le circuit de refroidissement 2 du moteur 1, dit circuit caloporteur haute température ou circuit HT, essentiellement constitué par une boucle de refroidissement traversant la culasse et le carter cylindres, dans laquelle circule un fluide de refroidissement, tel qu'un mélange d'antigel et d'eau, qui s'échauffe en traversant le moteur 1 et est refroidi en traversant un radiateur 3, typiquement disposé en façade avant du véhicule, à proximité immédiate, vu du flux d'air extérieur le traversant, d'un groupe moto-ventilateur (GMV) 5 situé à l'avant ou à l'arrière du radiateur 3.

Un circuit de réfrigération 6 du véhicule fonctionnant en boucle fermée comporte un évaporateur 7 au sein duquel le fluide réfrigérant absorbe la chaleur de l'air habitacle en changeant d'état physique, c'est-à-dire en passant totalement en phase gazeuse. A la traverse de l'évaporateur 7, le gaz frigorigène passe dans un détendeur 8. En sortie de l'évaporateur 7, le gaz frigorigène circule dans les canalisations jusqu'à un compresseur 11 dans lequel il est comprimé. Le gaz frigorigène haute pression en sortie du compresseur 11 est introduit dans un condenseur 12 au sein duquel le gaz frigorigène cède sa chaleur à l'air extérieur traversant le condenseur 12 grâce à l'avancement du véhicule et/ou au fonctionnement du GMV 5. Ce faisant, le fluide frigorigène change à nouveau d'état physique et repasse totalement en phase liquide. En sortie du condenseur 12, le fluide frigorigène s'achemine à travers les canalisations jusqu'à l'évaporateur 7 en traversant au préalable le détendeur 8.

Compte tenu des exigences requises en termes de puissance pour les nouvelles motorisations, il est classique de disposer sur la ligne d'admission d'air du moteur 1, un turbocompresseur 15 destiné à comprimer l'air devant être admis dans les chambres de combustion. Toutefois, l'air comprimé a tendance à se dilater en sortie du turbocompresseur 15. Aussi, afin de maintenir la densité de l'air acquise en sortie du turbocompresseur 15, il est nécessaire de le refroidir.

A cet effet, on utilise, en aval du turbocompresseur 15, un échangeur de chaleur apte à refroidir l'air circulant dans la ligne d'admission. Cet échangeur de chaleur 16 est habituellement le Refroidisseur d'Air de Suralimentation (RAS), même s'il est possible qu'il n'y ait pas que de l'air qui y circule. En effet, dans certains cas, il peut y circuler un mélange air et de gaz d'échappement issus d'un système EGR de recirculation des gaz d'échappement. Ce refroidissement se fait généralement au travers d'un échangeur air/air 16 implanté dans le bloc avant du véhicule.

Pour favoriser les économies d'énergie et les émissions en CO2 et en polluants, dans une perspective tant réglementaire que consumériste (réduction de l'écart entre la consommation homologuée et la consommation en usage), en parallèle de l'allègement des véhicules, on tend à les équiper de moteurs de cylindrées de plus en plus faibles mais dont les performances (puissance maximale, couple à bas régime, brio) sont au moins identiques sinon supérieures aux moteurs de cylindrée plus élevée, ce qui généralise le recours à la suralimentation (notamment au moyen d'un turbocompresseur) nécessitant une performance importante de refroidissement. Ainsi, pour satisfaire aux exigences de performance et de dépollution du moteur et de compacité d'architecture, il est nécessaire de refroidir davantage l'air de suralimentation, à l'aide d'un autre moyen que l'air de refroidissement venant de l'extérieur.

Il est ainsi connu de l'état de l'art antérieur de refroidir indirectement l'air de suralimentation par la mise en oeuvre d'un fluide caloporteur intermédiaire entre l'air (ou les gaz) de suralimentation et l'air extérieur, par exemple à l'aide d'un RAS 16' à eau virtuellement implantable n'importe où dans le compartiment moteur mais disposé avantageusement à proximité ou plus particulièrement directement intégré dans le répartiteur d'admission d'air du moteur thermique 1, comme cela est représenté sur la figure 2. Le refroidissement s'effectue alors à l'aide d'un circuit de liquide de refroidissement 19, dit circuit caloporteur de basse température ou circuit BT, par opposition au circuit HT 2 du moteur thermique 1. Le liquide de refroidissement circule dans le circuit caloporteur basse température 19 à l'aide d'une pompe à eau 20 par exemple de type électrique, entre le RAS 16 et un radiateur 21 constitué par un échangeur air/eau situé en façade avant du véhicule.

Il est connu de l'état de l'art antérieur les bénéfices pouvant être tirés d'un refroidissement indirect selon ce biais de l'air de suralimentation, en préférence à son refroidissement direct par l'air extérieur, malgré la complexification induite du circuit de refroidissement BT 19 indépendant. Ainsi, la performance de refroidissement, en particulier son lissage par l'inertie thermique plus élevée, est une source de gain en comportement transitoire du moteur (brio, accélérations), en dépollution (NOx en Diesel) et en consommation de carburant. La réduction (de 50 à 80%) des pertes de charge du circuit d'air de suralimentation est en outre une source de gains en performance du moteur thermique. Le temps de réponse du turbocompresseur 15 du moteur thermique 1 bénéficie de la réduction (de 20 à 35%) du volume d'air entre la sortie du turbocompresseur 15 et l'entrée du moteur 1, grâce à la réduction des longueurs des durits d'air et les dimensions et le volume plus faibles du RAS 16', d'où un gain en comportement transitoire du moteur 1. La réduction de la pression de suralimentation requise (comprise entre 0,1 à 0,3 bar), est exploitable soit pour augmenter davantage la pression de suralimentation du moteur thermique pour en tirer davantage de puissance spécifique, soit pour en diminuer le temps de réponse à travers l'usage d'un turbocompresseur de taille réduite.

Il est également possible d'obtenir des gains en implantation par suppression des durits d'air de gros volume entre le moteur 1 et le RAS air/air 16 implanté en avant du véhicule et/ou par réduction de la surface ou de l'épaisseur du radiateur BT 21 par rapport au RAS air/air 16 offrant la même performance équivalente de refroidissement de l'air de suralimentation, exploitable notamment en gain de porte-à-faux avant du véhicule, de réparabilité ou de latitude offerte pour augmenter si nécessaire le volume du répartiteur d'admission pour y optimiser l'intégration du RAS air/eau 16'.

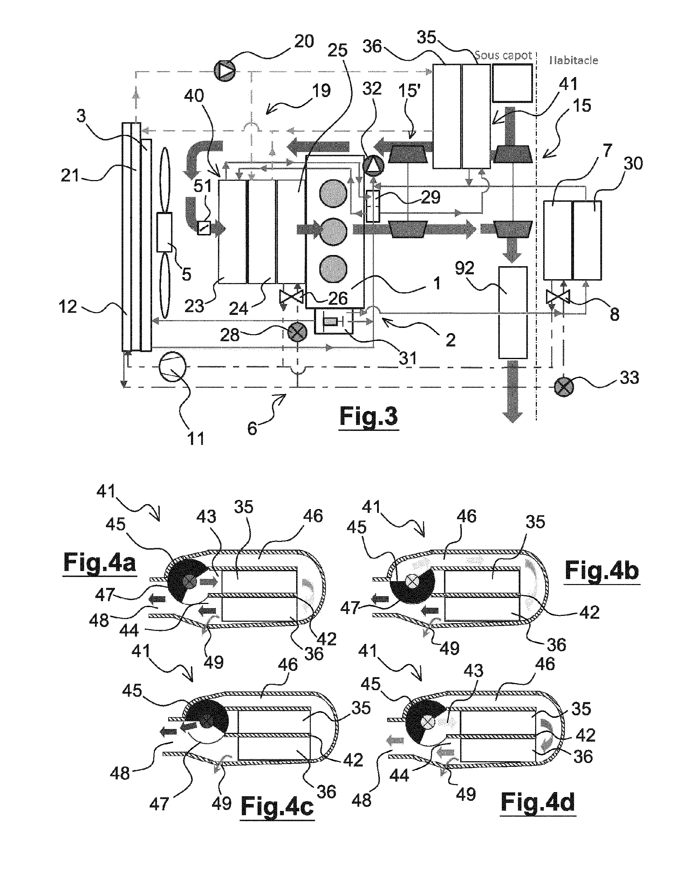

On connaît également des moteurs thermiques à petite cylindrée de puissance spécifique très élevée et suralimentés via deux étages 15, 15' successifs de suralimentation (cf. figure 3) par la mise en oeuvre, soit de deux turbocompresseurs dont les turbines disposées en série ou en parallèle (avantageusement dans ce cas, en un montage dit séquentiel des deux turbocompresseurs) sont entraînées par les gaz d'échappement, soit d'un compresseur d'air entraîné mécaniquement par le moteur en plus d'un turbocompresseur dont la turbine est entraînée par les gaz d'échappement.

De tels moteurs ont des exigences en rupture de leur système de suralimentation, dont son refroidissement. Ainsi, la température de l'air de suralimentation est au moins égale à 150°C et peut dépasser 200°C et même atteindre 220 à 230°C en sortie du compresseur, tandis qu'en entrée du moteur 1 la température de l'air de suralimentation doit être ramenée à 40°C, et en-deçà (jusqu'à 15 à 20°C) pour des moteurs à cylindrée réduite à forts couple et puissance spécifiques.

De tels besoins requièrent un circuit de refroidissement de l'air de suralimentation très efficace, en particulier concernant les performances de refroidissement des échangeurs air/eau (radiateur air/eau BT 21 en façade avant du véhicule et RAS air/eau 16' intégré au répartiteur d'admission), qui vont à l'encontre des objectifs de masse, de coûts et d'encombrement alloués à de telles adaptations. D'autre part, même si dans la majorité des conditions de roulage l'air doit être le plus frais possible à l'entrée du moteur thermique 1 pour améliorer le remplissage en air des chambres de combustion de celui-ci, l'évolution des normes de dépollution peut exiger de l'air chaud dans certaines conditions de roulage. C'est notamment le cas lorsqu'il est nécessaire de régénérer un filtre à particules ou bien lors du démarrage du moteur froid qui génère trop de monoxyde de carbone et d'hydrocarbures imbrûlés. Enfin, les architectures actuellement usitées (notamment en présence d'un système EGR de recirculation des gaz d'échappement, à des fins de réduction des émissions polluantes et d'amélioration de la consommation spécifique) présentent l'inconvénient de pouvoir générer, dans certaines conditions de fonctionnement du moteur et du véhicule et sous certaines conditions climatiques (hygrométrie, température extérieure, ...) des condensats qui, par encrassement ou par accumulation ou gel notamment, peuvent dégrader le fonctionnement du moteur.

L'invention vise à remédier efficacement à au moins un de ces inconvénients en proposant un module d'admission d'air d'un moteur à combustion interne de véhicule automobile, ainsi qu'un dispositif d'échange de chaleur disposé dans un tel module d'admission d'air, et un système de transferts thermiques comprenant un tel module d'admission d'air, comportant au moins deux étages de suralimentation en air dudit moteur à combustion interne, caractérisé en ce qu'il comporte en outre:
- des moyens assurant un premier échange thermique avec l'air de suralimentation via un circuit caloporteur haute température du moteur à combustion interne de manière à faire passer l'air de suralimentation d'une température supérieure ou égale à 150 degrés Celsius à une température située dans une première plage de valeurs de températures;
- des moyens assurant un deuxième échange thermique avec l'air de suralimentation via un circuit caloporteur basse température de manière à réduire la température de l'air de suralimentation dans une deuxième plage de valeurs de températures, et
- des moyens assurant un troisième échange thermique de manière à réduire la température de l'air de suralimentation dans une troisième plage de valeurs de température, avant son admission dans les chambres de combustion du moteur à combustion interne.

Un refroidissement de l'air de suralimentation en plusieurs étapes permet ainsi de réduire les contraintes sur le circuit basse température, en autorisant l'utilisation d'une pompe électrique de performance standard et de taille réduite, donc moins chère, et sans requérir des surfaces et/ou des performances d'échange thermique trop encombrantes et/ou onéreuses. Cela permet d'augmenter la compacité du système de thermo-management de l'air de suralimentation tout en optimisant la section de passage offerte à l'air de suralimentation et la longueur des trajets successifs de l'air au sein des échangeurs, afin d'optimiser la perte de charge aéraulique du système.

Selon une réalisation:
- la première plage de valeurs de température des gaz de suralimentation est comprise entre 90 et 130 degrés Celsius,
- la deuxième plage de valeurs de température des gaz de suralimentation est comprise entre 40 et 50 degrés Celsius,
- la troisième plage de valeurs de température des gaz de suralimentation est comprise entre 20 et 25 degrés Celsius, voire en-dessous selon les conditions de fonctionnement du moteur à combustion interne, du véhicule automobile, et les conditions extérieures.

Selon une réalisation,
- les moyens assurant le premier échange thermique sont formés par un premier échangeur entre l'air de suralimentation et un liquide de refroidissement du circuit caloporteur haute température,
- les moyens assurant le deuxième échange thermique sont formés par un deuxième échangeur entre l'air de suralimentation et un liquide de refroidissement du circuit caloporteur basse température, et
- les moyens assurant le troisième échange thermique sont formés par un troisième échangeur constitué par un évaporateur associé à un circuit de réfrigération du véhicule automobile.

Selon une réalisation, l'évaporateur assurant le troisième échange thermique est disposé sur le circuit de réfrigération en parallèle d'un autre évaporateur situé dans un habitacle du véhicule automobile.

Selon une réalisation, le circuit de réfrigération comportant une première branche reliée à l'évaporateur de l'habitacle et une deuxième branche reliée à l'évaporateur refroidissant l'air de suralimentation, une vanne marche/arrêt est disposée sur chacune des branches.

Selon une réalisation, le raccordement du premier échangeur au circuit caloporteur haute température du moteur à combustion interne est réalisé sur une dérivation pratiquée dans un conduit de court-circuit interne du moteur à combustion interne en amont d'un retour d'un aérotherme. Selon cette réalisation, le circuit du liquide de refroidissement haute température du moteur comprend une boucle qui comporte le premier échangeur entre l'air de suralimentation et un liquide de refroidissement du circuit caloporteur haute température, et dont l'entrée est disposée en aval de la jonction de la branche de refroidissement et d'un conduit de court-circuit interne du moteur, la branche de refroidissement comprenant un radiateur haute température adapté à refroidir le liquide de refroidissement sortant du moteur, et le conduit de court-circuit interne du moteur court-circuitant également ce radiateur. Selon cette réalisation, l'entrée de la boucle comportant le premier échangeur entre l'air de suralimentation et le liquide de refroidissement du circuit caloporteur haute température est disposée en amont d'une pompe adaptée à faire circuler le liquide de refroidissement du moteur. Selon une variante de cette réalisation, l'entrée de la boucle comportant le premier échangeur entre l'air de suralimentation et le liquide de refroidissement du circuit caloporteur haute température est disposée en amont de la sortie d'une boucle d'aérotherme dans laquelle le liquide de refroidissement en sortie du moteur traverse un aérotherme. Un tel échangeur permet de réchauffer l'air venant de l'extérieur ou en recirculation pénétrant dans l'habitacle du véhicule automobile.

Selon une réalisation, les trois échangeurs sont disposés sensiblement les uns au-dessus des autres à l'intérieur d'un répartiteur d'admission d'air et sont séparés par des parois pour assurer les différentes étapes du refroidissement de l'air de suralimentation. De cette façon, l'air de suralimentation est obligé de traverser les trois échangeurs de chaleur, ce qui permet une optimisation du refroidissement de l'air et une homogénéisation de la température de l'air en entrée des différentes chambres de combustion. Cette paroi de séparation est avantageusement adaptée à isoler thermiquement chaque échangeur l'un de l'autre. L'absence de pont thermique entre les échangeurs de chaleur permet d'améliorer l'efficacité de refroidissement de l'air de suralimentation par les liquides caloporteurs haute et basse températures et par le fluide réfrigérant.

Selon une réalisation, le répartiteur d'air comprend des parois de délimitation formant sa structure externe, et auxquelles sont fixés les échangeurs de chaleur de façon étanche afin de guider correctement l'air de suralimentation. Selon une variante, les parois de délimitation sont adaptées à isoler thermiquement les éléments se trouvant à l'intérieur de ces parois de l'air du compartiment moteur et du moteur à combustion.

Selon une réalisation, au moins un des échangeurs est un échangeur en U. De ce fait et selon le cas, l'entrée et la sortie du liquide caloporteur ou du fluide frigorigène traversant l'échangeur en U sont disposées du même côté de l'échangeur, ce qui facilite la mise en place de ce dernier dans le répartiteur (insertion par translation) et les accès pour d'éventuelles opérations ultérieures. Cette caractéristique permet également d'optimiser la mise en oeuvre des différents niveaux d'étanchéité, d'une part entre les parois du répartiteur d'air et les échangeurs, et d'autre part vers l'extérieur. Selon une variante préférentielle de cette réalisation, les trois échangeurs de chaleur sont en U.

Selon une réalisation, le répartiteur d'admission d'air comporte une première vanne distributrice disposée en entrée du répartiteur d'admission d'air en aval d'un boîtier papillon ou d'un doseur d'air, ainsi qu'une deuxième vanne distributrice disposée en sortie du répartiteur d'admission d'air, la première et la deuxième vannes distributrices étant configurées pour prendre différentes positions telles que l'air de suralimentation peut soit traverser les trois échangeurs suivant un parcours en forme de S, soit traverser deux des échangeurs parmi les trois échangeurs suivant un parcours en forme de U, soit traverser un seul des échangeurs, soit court-circuiter l'ensemble des trois échangeurs pour alimenter directement le moteur à combustion interne. Un tel agencement permet non seulement de refroidir l'air de suralimentation mais également de le réchauffer, selon les besoins. Le réchauffage de l'air permet d'accélérer la montée en température du moteur à combustion, générant un gain en consommation de carburant, une réduction à la source des émissions polluantes ainsi qu'une atteinte sensiblement plus rapide des critères de confort thermique dans l'habitacle du véhicule par conditions extérieures froides. Il permet également d'inhiber les avortements de régénération d'un filtre à particules installé sur la ligne d'échappement des gaz de combustion et le gel de condensats à l'intérieur du refroidisseur de l'air de suralimentation du moteur à combustion.

Selon une réalisation, le système de transfert thermique comprend un système de contrôle adapté à contrôler la position des vannes distributrices en fonction notamment de la température de l'air de suralimentation et du régime et de la charge du moteur.

Selon une réalisation, le boîtier papillon ou le boîtier doseur d'air est positionné sur un côté du répartiteur d'admission d'air de manière à réaliser une circulation d'air latérale vers le ou les échangeurs.

Selon une réalisation, un agencement des échangeurs au sein du répartiteur d'admission d'air est réalisé de manière à créer un angle avec une direction horizontale, une paroi inférieure du répartiteur d'admission d'air réalisant elle-même un angle avec cette direction horizontale, une paroi inférieure sur laquelle repose l'évaporateur étant percée de multiples orifices évacuant vers la paroi inférieure du répartiteur d'admission d'air des condensats en direction d'un orifice pratiqué en un point bas de la paroi inférieure du répartiteur d'admission d'air.

Selon une réalisation,
- les moyens assurant le premier échange thermique sont formés par un premier échangeur entre l'air de suralimentation et un liquide de refroidissement du circuit caloporteur haute température,
- les moyens assurant le deuxième et le troisième échange thermique sont formés par un deuxième échangeur entre l'air de suralimentation et un liquide de refroidissement du circuit caloporteur basse température,
- un refroidisseur étant implanté sur le circuit caloporteur basse température pour assurer un échange thermique entre le liquide de refroidissement du circuit caloporteur basse température et un fluide réfrigérant d'un circuit de réfrigération du véhicule automobile.

Selon une réalisation, le module comporte une vanne quatre voies apte à connecter, dans l'une de ses configurations, le refroidisseur au circuit caloporteur basse température pour faire diminuer la température du liquide de refroidissement avant son entrée dans le deuxième échangeur, et apte à découpler le refroidisseur par rapport au circuit caloporteur basse température dans une autre configuration.

Selon une réalisation, le module comporte un condenseur à eau ayant une première partie connectée au circuit caloporteur basse température et une deuxième partie réalisant un refroidissement du fluide réfrigérant connectée à un passage supplémentaire du liquide de refroidissement du circuit caloporteur basse température au sein d'un radiateur appartenant au circuit caloporteur basse température.

Selon une réalisation, le premier et le deuxième échangeurs sont disposés sensiblement l'un au-dessus de l'autre à l'intérieur d'un répartiteur d'admission d'air, le répartiteur d'admission d'air comportant en outre une vanne configurée pour prendre différentes positions telles que l'air de suralimentation peut soit traverser le premier échangeur puis le deuxième échangeur en circulant dans le répartiteur d'admission d'air suivant un parcours en forme de U, soit traverser uniquement un des deux échangeurs, soit court-circuiter les deux échangeurs pour alimenter directement le moteur à combustion interne.

Selon une réalisation, le module comporte entre les deux étages de suralimentation, deux échangeurs connectés aux circuits caloporteur haute température et basse température respectifs.

Selon une réalisation, les deux échangeurs sont disposés sensiblement l'un au-dessus de l'autre à l'intérieur d'un boîtier, le boitier comportant en outre une vanne configurée pour prendre différentes positions, telles que l'air de suralimentation peut soit traverser le premier échangeur connecté au circuit caloporteur haute température puis le deuxième échangeur connecté au circuit caloporteur basse température en circulant dans le boîtier suivant un parcours en forme de U, soit traverser uniquement un des deux échangeurs, soit court-circuiter les deux échangeurs pour alimenter directement le moteur à combustion interne.

Selon une réalisation, le module est configuré pour refroidir un liquide de refroidissement du circuit caloporteur basse température au moyen d'un radiateur appartenant au circuit caloporteur haute température lorsqu'un thermostat du moteur à combustion interne est fermé, en plus d'un radiateur appartenant au circuit caloporteur basse température.

Selon une réalisation, une vanne de couplage de type pilotée est apte à commander le couplage ou le découplage du radiateur du circuit caloporteur haute température par rapport au circuit caloporteur basse température. Selon cette réalisation, la vanne de couplage permet, en position ouverte, la circulation du liquide caloporteur basse température au travers du radiateur haute température si et seulement si le thermostat du moteur à combustion interne est fermé. Selon un mode particulier de cette réalisation, en position ouverte, la vanne de couplage permet ainsi la mise en parallèle du radiateur haute température avec le radiateur basse température.

Selon une réalisation, un thermostat monté entre des tuyaux de sortie des radiateurs des circuits caloporteurs haute et basse température, et un clapet pressostatique monté entre des tuyaux d'entrée des radiateurs des circuits caloporteurs haute et basse température sont aptes à commander le couplage ou le découplage du radiateur du circuit caloporteur haute température par rapport au circuit caloporteur basse température.

Selon une réalisation, le module comporte en outre des moyens de recirculation des gaz d'échappement haute ou basse pression.

L'invention sera mieux comprise à la lecture de la description qui suit et à l'examen des figures qui l'accompagnent. Ces figures ne sont données qu'à titre illustratif mais nullement limitatif de l'invention.

La figure 1, déjà décrite, est une représentation schématique d'une architecture selon l'état de la technique permettant un refroidissement direct de l'air de suralimentation;

La figure 2, déjà décrite, est une représentation schématique d'une architecture selon l'état de la technique permettant un refroidissement indirect de l'air de suralimentation;

La figure 3 est une représentation schématique d'un premier mode de réalisation de l'architecture selon la présente invention de type tri-étagée;

Les figures 4a à 4d sont des représentations schématiques des différentes configurations du système à double échangeurs situé entre les deux étages de compression de l'architecture de la figure 3;

Les figures 5a à 5f sont des représentations schématiques des différentes configurations du répartiteur d'admission tri-étages de l'architecture de la figure 3;

La figure 5g montre l'agencement des parois situées dans le fond du répartiteur d'admission d'air des figures 5a à 5f;

La figure 6 est une représentation schématique d'un deuxième mode de réalisation de l'architecture selon la présente invention de type bi-étagée;

La figure 7 est une représentation schématique d'un radiateur basse température multi-passes de l'architecture la figure 6;

La figure 8 est une représentation schématique de l'architecture de la figure 6 lorsque le passage dans le deuxième évaporateur a été coupé;

Les figures 9a à 9d sont des représentations schématiques des différentes configurations du répartiteur d'admission bi-étagé de l'architecture de la figure 6;

Les figures 10a et 10b montrent les états d'un système permettant le couplage et le découplage entre le radiateur haute température et le circuit basse température;

Les figures 11 a et 11 b montrent les états d'un autre type de système permettant le couplage et le découplage entre le radiateur haute température et le circuit basse température;

La figure 12 montre une variante de réalisation de l'architecture de la figure 6 comportant en outre un système de recirculation des gaz d'échappement haute pression injectés en amont du système de refroidissement des gaz de suralimentation;

La figure 13 montre une variante de réalisation de l'architecture de la figure 6 comportant en outre un système de recirculation des gaz d'échappement basse pression injectés en amont du système de refroidissement des gaz de suralimentation;

Les éléments identiques, similaires, ou analogues conservent la même référence d'une figure à l'autre.

Par ailleurs, le fluide circulant dans le circuit haute température 2 est représenté en traits pleins, tandis que le fluide circulant dans le circuit basse température 19 est représenté en traits discontinus et le fluide circulant dans le circuit réfrigérant est représenté en traits mixte. On distingue également sur les figures les éléments situés du côté de l'habitacle du véhicule par rapport aux éléments situés sous le capot du véhicule. Dans la suite de la description, les abréviations HT et BT correspondent respectivement aux expressions "haute température" et "basse température".

La figure 3 illustre une architecture du système de thermo-management proposé et en particulier, pour réaliser les échanges thermiques évoqués ci-avant, l'intégration aux circuits caloporteurs HT 2 et BT 19 des échangeurs air/liquide 23, 24, et l'intégration d'un évaporateur supplémentaire 25 au circuit de réfrigération 6 du véhicule. Ces échangeurs 23, 24, 25 sont ici représentés côte à côte pour une compréhension plus aisée mais on verra plus loin que leur disposition préférée est l'un au-dessus de l'autre.

L'évaporateur 25 réfrigérant l'air de suralimentation est associé à un détendeur 26 et disposé sur le circuit de réfrigération 6 en parallèle de l'évaporateur habitacle 7. Préférentiellement, une vanne marche/arrêt 28, 33 est disposée sur chacune des branches du circuit de réfrigération 6 afin:
- de couper de façon effective la branche du circuit de réfrigération 6 qui doit être désactivée;
- de se prémunir, lorsque l'une des branches est inactive, de toute rétention dans cette branche de l'huile de lubrification du compresseur de climatisation 11 et des connections du circuit 6, préjudiciable à l'étanchéité du circuit 6 et surtout à la fiabilité du compresseur 11 ;
- d'éviter le glaçage d'un des deux évaporateurs 7, 25 en cas de fonctionnement en pleine puissance de la réfrigération pour satisfaire l'autre évaporateur.

Préférentiellement, le raccordement du RAS air/liquide 23 au circuit de refroidissement HT 2 du moteur thermique 1 s'effectue sur une dérivation 29 via une restriction de section pratiquée dans le conduit de court-circuit du radiateur 3, en amont du retour de l'aérotherme 30. Cela permet d'irriguer le RAS air/liquide 23 en continu (que le thermostat 31 soit fermé ou ouvert) avec le liquide caloporteur HT du moteur thermique 1, selon une source de débit robuste, continue et la plus indépendante des conditions de fonctionnement du moteur et du véhicule. En effet, la fermeture du thermostat 31 dirige le liquide caloporteur HT sortant du moteur thermique 1 vers d'une part ce conduit de court-circuit jusqu'à la pompe à eau 32 du moteur 1 et d'autre part à travers l'aérotherme 30. Dans ce cas (thermostat fermé), l'implantation de la dérivation d'alimentation du RAS en amont du retour de l'aérotherme 30 permet d'irriguer le RAS 23 par le liquide HT ayant une température représentative de la température du liquide en sortie du moteur 1, en s'affranchissant de l'échange thermique à travers l'aérotherme 30, variable notamment selon la température extérieure, la température du liquide HT et du fonctionnement du groupe de climatisation (recirculation de l'air habitacle ou aspiration à 100% d'air extérieur, débit d'air à travers l'aérotherme 30, température ambiante de l'habitacle souhaitée par l'utilisateur). A mesure que le thermostat moteur 31 s'ouvre, le liquide HT entrant dans la dérivation 29 est un mélange entre le débit de liquide HT issu du moteur 1 et refroidi au sein du radiateur HT 3, en proportion d'autant plus faible que le thermostat 31 est faiblement ouvert, et le débit de liquide HT issu du moteur 1 et empruntant directement le conduit de court-circuit du moteur.

Ce mélange est animé, pour un régime de rotation constant de la pompe à eau 32 du moteur thermique 1, d'un débit de fluide constant, ce qui n'aurait pas été le cas si le RAS air/liquide HT 23 avait été alimenté depuis une dérivation via une restriction de section pratiquée sur le tuyau de sortie du radiateur HT 3. Le débit de fluide HT dans le RAS 23 aurait été nul tant que le thermostat 31 est fermé, puis fonction de l'ouverture du thermostat 31, elle-même dépendant de la température extérieure et de la température du liquide HT l'irriguant (et, si ce thermostat 31 est électriquement piloté, de conditions de fonctionnement du moteur thermique et du véhicule telles que notamment le régime et la charge du moteur, la vitesse du véhicule). Ainsi, l'implantation de la dérivation 29 sur le conduit de court-circuit permet d'irriguer le RAS 23 par du liquide HT en débit constant et continu.

Lorsque le thermostat 31 est en pleine ouverture, le débit en entrée de la dérivation 29 irriguant le RAS 23 est directement issu de la sortie du radiateur 3 puisque l'accès du fluide HT en sortie moteur 1 au conduit de court-circuit est alors fermé par l'ouverture du thermostat 31 qui force le fluide HT en sortie moteur vers le radiateur HT 3. Dans ce cas (thermostat moteur ouvert), l'implantation de la dérivation 29 d'alimentation du RAS 23 en amont du retour de l'aérotherme 30 permet de s'affranchir de cette partie du fluide HT sortant du moteur thermique 1 et traversant l'aérotherme 30, qui est d'une température plus élevée que celle en sortie du radiateur HT 3.

D'autres implantations de cette dérivation 29 pour alimenter en fluide caloporteur HT le RAS HT 23 sont possibles et entrent dans le cadre de la présente invention. Néanmoins, le raccordement du RAS HT 23 au circuit de refroidissement HT 2 du moteur thermique 1 tel qu'évoqué précédemment, sur une dérivation 29 pratiquée dans le conduit de court-circuit interne du moteur thermique 1 en amont du retour de l'aérotherme 30, constitue l'architecture préférentielle.

De même pour l'architecture du circuit caloporteur BT 19 proposée, différentes architectures alternatives permettent de se passer d'une pompe à eau électrique 20 ou d'un radiateur BT 21 dédiés, mais il s'agit de variantes non préférentielles car alors la disponibilité et la performance de refroidissement du circuit BT 21 qui en découle est alors fortement réduite, comme par exemple :
- une intégration du radiateur BT 21 au radiateur HT 3, qui consiste soit en un parcours supplémentaire du fluide HT à l'intérieur du radiateur HT 3, pour générer le fluide BT en au moins une passe supplémentaire au parcours que subit le fluide HT pour sortir du radiateur HT 3 et retourner en entrée du moteur thermique 1, mais alors le fluide BT n'est disponible que si le thermostat moteur 31 est ouvert. En outre, les radiateurs HT 3 et BT 21 doivent se partager la surface d'échange disponible en face avant du véhicule; ou
- une alimentation du circuit BT 19 depuis une dérivation du circuit HT 2, par exemple depuis le circuit comportant l'aérotherme 30, ce qui impose un niveau thermique élevé en entrée du circuit BT 19.

Les radiateurs HT 3 et BT 21 présentés en série l'un par rapport à l'autre vis-à-vis du flux d'air venant de l'extérieur et entrant par la calandre du véhicule dans le sous-capot, peuvent être disposés différemment (côte à côte, l'un au-dessus ou au-dessous de l'autre, dans le cas où le radiateur BT 21 n'occupe pas toute la surface disponible dans le module avant pour le refroidissement) sans sortir du cadre du présent mémoire.

Dans tous les cas, l'architecture du circuit caloporteur BT 19 telle que proposée plus haut constitue l'architecture préférée du système.

Dans le cas d'une motorisation à au moins deux étages de suralimentation 15, 15', on dispose de préférence, entre les deux compresseurs, deux échangeurs 35, 36 représentés en figure 3 côte à côte pour une compréhension plus aisée mais on verra plus loin que leur disposition préférée est l'un au-dessus de l'autre. Ces échangeurs 35, 36 sont nécessaires lorsque les deux compresseurs des étages 15, 15' sont actifs simultanément, et évitent le surdimensionnement du répartiteur d'admission 40. Dans le cadre de l'architecture présentée, les échangeurs 35, 36 sont connectés aux circuits de refroidissement HT 2 et BT 19 respectifs, de façon analogue aux RAS HT 23 et BT 21 associés. Ces deux échangeurs 35, 36 sont disposés sensiblement l'un au-dessus de l'autre à l'intérieur d'un boîtier 41 mais séparés par une paroi de celui-ci afin d'assurer les deux étapes du refroidissement de l'air de suralimentation et d'éviter que celui-ci ne court-circuite l'un ou l'autre des échangeurs 35, 36. Ainsi, dans au moins une des configurations du système, l'air de suralimentation traverse le premier échangeur 35 (irrigué par du liquide caloporteur HT) puis le deuxième échangeur 36 (traversé par le liquide BT) en circulant dans le boîtier 41 suivant un parcours en forme de U.

Ces échangeurs air/eau 35, 36 sont de type classique à tubes et ailettes: les liquides caloporteurs HT et BT circulent à l'intérieur de tubes éventuellement équipés de turbulateurs internes (afin d'améliorer l'échange thermique) et les ailettes, éventuellement équipées de persiennes visant également à améliorer l'échange thermique sont préférentiellement brasées aux tubes afin de maximiser le contact thermique entre eux et disposées de sorte à maximiser les surfaces d'échange entre l'air et le liquide de refroidissement. Une attention particulière est apportée à l'étanchéité interne du boîtier 41, entre les échangeurs 35, 36 et les parois du boîtier 41, notamment compte-tenu des niveaux de pressions de suralimentation évoqués, afin d'obliger l'air de suralimentation à traverser l'un et l'autre des échangeurs 35, 36 sans les court-circuiter. Afin d'optimiser l'intégration de chaque échangeur air/eau 35, 36 à l'intérieur du boîtier 41, la circulation du liquide de refroidissement au sein de chaque échangeur 35, 36 sera de type en U afin de disposer les embouts d'entrée et de sortie de fluide caloporteur du même côté de l'échangeur. Cela permet ainsi, lors de l'assemblage des différents composants pour fabriquer le boîtier 41, d'insérer par translation chaque échangeur 35, 36 à l'intérieur du corps du boîtier 41 par le côté. Ce montage permet également d'optimiser la mise en oeuvre des différents niveaux d'étanchéité (vers l'extérieur et entre le boîtier 41 et les échangeurs 35, 36).

En plus des deux échangeurs 35, 36, le boîtier 41 comporte:
- une paroi 42 disposée entre les deux échangeurs 35 et 36 commune aux deux conduites 43, 44 dans chacune desquelles est situé un échangeur 35, 36. Cette paroi réalise une étanchéité à l'air de suralimentation (le forçant à traverser intégralement l'un et/ou l'autre des deux échangeurs 35, 36) et une isolation thermique entre les deux échangeurs 35, 36 afin d'inhiber tout pont thermique entre eux;
- une vanne distributrice 45;
- un troisième conduit 46 permettant à l'air de suralimentation de court-circuiter l'un des deux échangeurs 35, 36 grâce à la position simultanément prise par la vanne distributrice 45;
- une paroi 47 disposée entre la vanne distributrice 45 et le conduit 44 où est disposé l'échangeur BT 36, de sorte que l'air de suralimentation ne peut directement passer de la vanne distributrice 45 au conduit 44 où se trouve cet échangeur air/liquide 36;
- un quatrième conduit 48 permettant à l'air de suralimentation de court-circuiter les deux échangeurs 35, 36 et le troisième conduit 46 grâce à la position en même temps prise par la vanne distributrice 45; et
- un orifice 49, disposé, selon l'architecture du boîtier 41 et son implantation dans le sous capot, en un point bas, en aval des échangeurs 35, 36, de sorte à évacuer les produits de la condensation de l'humidité contenue dans l'air extérieur (et éventuellement des gaz de recirculation EGR) lors de la mise en oeuvre de l'échangeur BT 36. Cet orifice 49 est équipé d'un tuyau drainant ces condensats hors du moteur thermique 1 et du sous-capot sans provoquer d'écoulement sur des composants sensibles (pièces électriques et électroniques), lors du fonctionnement et hors fonctionnement du moteur thermique 1 (après sa coupure post-fonctionnement). En effet, le risque de formation de condensats augmente à des taux d'EGR élevés, avec des températures d'air plus faibles en sortie des échangeurs 35, 36 et à des pressions de suralimentation importantes (le point de rosée étant fonction de la température, du niveau d'humidité relative et de la pression).

La vanne distributrice 45 et les dispositifs précités autorisent la circulation de l'air de suralimentation et des gaz EGR à l'intérieur du boîtier 41 selon chacune des configurations suivantes.

Dans une première configuration montrée à la figure 4a, la vanne distributrice 45 prend une position telle que le passage des gaz de suralimentation entrant dans le boîtier 41 vers les troisième 46 et quatrième 48 conduits est obstrué: ces gaz ne peuvent donc emprunter que le premier conduit 43 qui leur fait traverser l'échangeur HT 35 puis le deuxième conduit 44 et l'échangeur BT 36.

Dans une deuxième configuration montrée à la figure 4b, la vanne distributrice 45 prend une position telle que le passage des gaz de suralimentation entrant dans le boîtier 41 vers les premier 43 et quatrième 48 conduits est obstrué : ces gaz ne peuvent donc emprunter que le troisième conduit 46 qui leur fait court-circuiter l'échangeur HT 35 et les amène en entrée du deuxième conduit 44 pour traverser l'échangeur BT 36.

Dans une troisième configuration montrée à la figure 4c, la vanne distributrice 45 prend une position telle que le passage des gaz de suralimentation entrant dans le boîtier 41 vers les premier 43 et troisième 46 conduits est obstrué: ces gaz ne peuvent donc emprunter que le quatrième conduit 48 et sont donc dirigés par la vanne distributrice 45 directement vers la sortie du boîtier 41, sans traverser aucun des deux échangeurs 35, 36.

Par la quatrième configuration décrite en figure 4d telle que la position prise par la vanne distributrice 45 est identique à celle prise dans la première configuration décrite en figure 4a, le système permet d'assurer un réchauffage de l'air de suralimentation.

Pour réaliser le refroidissement en au plus trois étapes de l'air de suralimentation tout en aboutissant à un système compact en ligne avec les objectifs de capot technique (chocs fémur et tête piéton vis-à-vis des objectifs de normalisation de type "EuroNCap"), les trois échangeurs associés (RAS air/eau HT 23 et BT 24 et l'évaporateur 25) sont disposés sensiblement les uns au-dessus des autres à l'intérieur du répartiteur d'admission d'air 40, et séparés par des parois afin d'assurer les différentes étapes du refroidissement de l'air de suralimentation et d'éviter que celui-ci ne court-circuite l'un ou l'autre des échangeurs 23, 24, 25 dans une configuration particulière.

Les échangeurs air/eau HT 23 et BT 24 sont du même type que les échangeurs air/eau 35, 36 évoqués précédemment. Une attention particulière est apportée à l'étanchéité interne du répartiteur 40, entre les échangeurs 23, 24, 25 et les parois du répartiteur 40, notamment compte-tenu des niveaux de pressions de suralimentation évoqués, afin d'obliger l'air de suralimentation à traverser, dans une configuration, les échangeurs 23, 24, 25 sans les court-circuiter et de favoriser une homogénéité de la température de l'air s'introduisant dans chaque cylindre. De même que pour les échangeurs 35 et 36, la circulation fluidique interne aux échangeurs 23, 24, 25 est de type en U afin de disposer les embouts d'entrée et de sortie de fluide (liquides de refroidissement des circuits HT 2 et BT 19 et fluide réfrigérant du circuit de réfrigération 6) du même côté de chaque échangeur, pour offrir les mêmes avantages.

En effet, une des contraintes d'un tel dispositif est d'avoir la plus grande homogénéité possible dans la répartition de l'air à l'intérieur du système et en particulier d'avoir la distribution de la température de l'air la plus uniforme possible. A cette fin, le boîtier papillon 51 ou le boîtier doseur d'air, généralement implanté en position centrale à l'entrée du répartiteur d'admission 40, est préférentiellement positionné sur le côté afin de réaliser une circulation d'air latérale vers le ou les échangeurs 23, 24, 25 (selon la configuration prise par le système) plus favorable en vue d'une distribution homogène de la température et du débit massique d'air dans les conduits et en sortie du répartiteur 40 vers et entre chaque cylindre du moteur thermique 1.

Les deux échangeurs air de suralimentation/liquide de refroidissement HT 23 et BT 24 et l'évaporateur air de suralimentation / réfrigérant 25 sont disposés à l'intérieur de conduits dans le corps du répartiteur d'admission 40, de sorte que dans au moins une des configurations du système, l'air de suralimentation effectue un trajet en forme de U ou de S en parcourant lesdits conduits du répartiteur 40 qui forcent l'air de suralimentation à travers lesdits échangeurs.

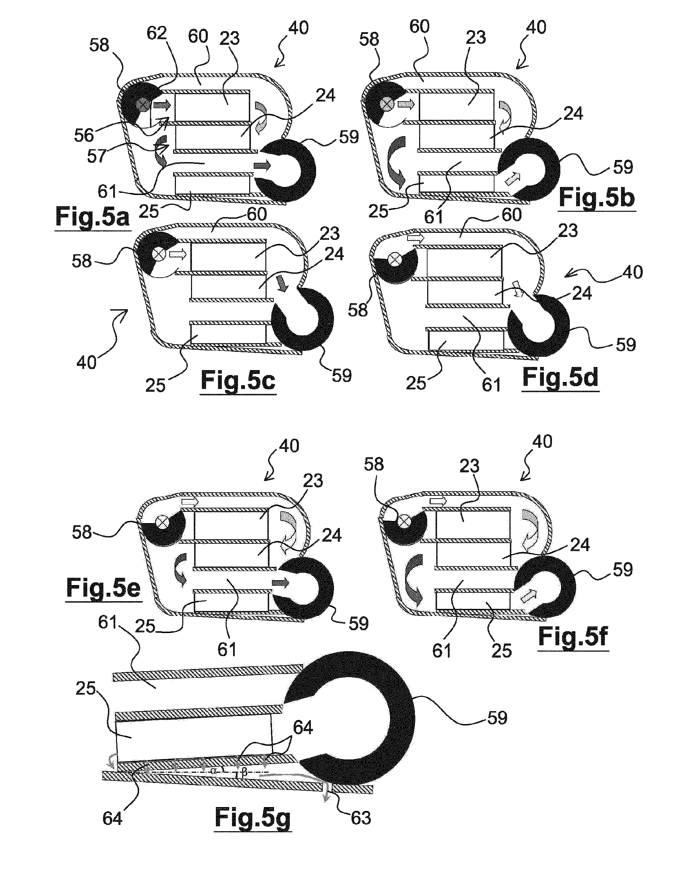

A cet effet et comme l'illustrent les figures 5a à 5g, le répartiteur d'admission 40 comporte notamment:
- des parois disposées entre les échangeurs 23, 24, 25, réalisant une étanchéité à l'air de suralimentation (le forçant à traverser intégralement les échangeurs) et une isolation thermique entre les échangeurs 23, 24, 25 afin d'inhiber tout pont thermique entre eux. Ces parois délimitent un premier conduit 56 associé au RAS HT 23 et un deuxième conduit 57 associé au RAS BT 24;
- une première vanne distributrice 58, disposée en entrée du répartiteur d'admission 40 en aval du boîtier papillon 51 ou du doseur d'air;
- une deuxième vanne distributrice 59 disposée en sortie du répartiteur d'admission 40;
- un conduit 60 permettant à l'air de suralimentation de court-circuiter un, deux, ou les trois échangeurs 23, 24, 25 grâce aux positions en même temps prises par les vannes distributrices 58, 59;
- un conduit de court-circuit 61 disposé entre l'échangeur air/liquide BT 24 et l'évaporateur 25 qui permet à l'air de suralimentation de court-circuiter l'évaporateur 25 et de renforcer l'isolation thermique de l'évaporateur 25 avec les autres échangeurs thermiques 23, 24 et le corps du répartiteur d'admission 40;
- une paroi 62 disposée contre la première vanne distributrice 58, de sorte que l'air de suralimentation ne peut directement passer de la première vanne distributrice 58 aux conduits où se trouvent l'échangeur air/liquide BT 24 et l'évaporateur 25 ou au conduit de court-circuit 61 ;
- un orifice 63, disposé, selon l'architecture du répartiteur 40 et son implantation dans le sous-capot, en un point bas, en aval des échangeurs 23, 24, 25, pour évacuer les produits de la condensation de l'humidité contenue dans l'air extérieur (et éventuellement des gaz EGR) lors de la mise en oeuvre de l'échangeur BT 24 et surtout de l'évaporateur 25. Cet orifice 63 est équipé d'un tuyau drainant ces condensats hors du moteur thermique 1 et du sous capot sans provoquer d'écoulement sur des composants sensibles (pièces électriques et électroniques) lors du fonctionnement et hors fonctionnement du moteur thermique 1 (après sa coupure post-fonctionnement).

Les vannes distributrices 58, 59 et les dispositifs précités autorisent la circulation de l'air de suralimentation et des gaz EGR à l'intérieur du répartiteur 40 selon chacune des configurations suivantes et autorisent donc un thermo-management par conséquent large des gaz de suralimentation. Dans une première configuration montrée à la figure 5a, la première vanne distributrice 58 prend une position telle que le passage des gaz de suralimentation entrant dans le répartiteur 40 vers le troisième conduit 60 est obstrué: ces gaz ne peuvent donc qu'emprunter le premier conduit 56 qui leur fait traverser le premier échangeur air de suralimentation/liquide de refroidissement HT 23. La deuxième vanne distributrice 59 obstrue le passage à travers l'évaporateur 25 (la boucle associée du circuit réfrigérant est alors inactive) et guide l'air de suralimentation en sortie de l'échangeur HT 23 à travers le deuxième conduit 57 et le deuxième échangeur air de suralimentation/liquide de refroidissement BT 24 puis à travers le conduit de court-circuit 61 vers les tubulures d'admission et les cylindres du moteur thermique 1.

Dans la deuxième configuration montrée à la figure 5b, la deuxième vanne distributrice 59 obstrue le conduit de court-circuit 61 et force l'air de suralimentation en sortie de l'échangeur HT 23 à travers le deuxième conduit 57 et le deuxième échangeur air de suralimentation/liquide de refroidissement BT 24 à traverser l'évaporateur 25 (la boucle associée du circuit réfrigérant 6 est alors active et la vanne 28 est ouverte et en état de marche) avant d'entrer dans les tubulures d'admission et les cylindres du moteur thermique 1.

Dans la troisième configuration montrée à la figure 5c, la deuxième vanne distributrice 59 obstrue les passages au travers du conduit de court-circuit 61 et de l'évaporateur 25 (la boucle associée du circuit réfrigérant 6 est alors inactive et la vanne 28 est fermée et en état d'arrêt). Dans le même temps, la première vanne distributrice 58 adopte la même position que celle déjà décrite en figure 5a : les gaz de suralimentation entrant dans le répartiteur 40 empruntent alors le premier conduit 56 et traversent le premier échangeur HT 23. A sa sortie, les gaz de suralimentation court-circuitent les échangeurs 24 et 25 et le conduit 61 grâce à la position prise par la deuxième vanne distributrice 59, avant d'entrer dans les tubulures d'admission et les cylindres du moteur thermique 1.

Dans une quatrième configuration montrée à la figure 5d, la première vanne distributrice 58 prend une position telle que le passage des gaz de suralimentation entrant dans le répartiteur 40 vers les premier 56 et quatrième 61 conduits sont obstrués: ces gaz ne peuvent donc emprunter que le troisième conduit 60 qui leur fait court-circuiter le premier échangeur HT 23. La deuxième vanne distributrice 59 obstrue les passages au travers du conduit de court-circuit 61 et de l'évaporateur 25: les gaz de suralimentation traversent alors le répartiteur 40 sans n'y subir aucun échange thermique avant de parvenir aux tubulures d'admission et aux cylindres du moteur thermique 1.

Dans une cinquième configuration montrée à la figure 5e, la première vanne distributrice 58 adopte la même position que celle déjà décrite en figure 5d : les gaz de suralimentation empruntent le troisième conduit 60 en court-circuitant le premier échangeur HT 23. La deuxième vanne distributrice 59 obstrue le passage au travers de l'évaporateur 25 et libère le passage de l'air à travers l'échangeur air/eau BT 24 et le conduit de court-circuit 61 vers les tubulures d'admission et les cylindres du moteur thermique 1.

Dans une sixième configuration montrée à la figure 5f, la première vanne distributrice 58 adopte la même position que celle déjà décrite en figures 5d et 5e et la deuxième vanne distributrice 59 obstrue les conduits de court-circuit 60 et 61 : l'air de suralimentation est alors forcé de traverser l'échangeur air/eau BT 24 et l'évaporateur 25 avant de parvenir aux tubulures d'admission et aux cylindres du moteur thermique 1.

En particulier, les première et deuxième configurations (cf. figures 5a et 5b) s'appliquent notamment lorsque le moteur thermique 1 en pleine charge requiert une température d'air d'admission abaissée dans le premier cas entre 40 et 50°C et bien en-dessous dans le second cas, par exemple comprise entre 15 et 20°C, donc à une température potentiellement inférieure à la température ambiante extérieure. Que la recirculation des gaz d'échappement soit inhibée ou pas, l'air de suralimentation entrant dans le répartiteur 40 à une pression maximale et surtout à une forte température (jusqu'à 200-230°C) - le boîtier 41 à échangeur bi-étages entre les deux compresseurs 15, 15' adoptant alors préférentiellement la configuration décrite par les figures 4b ou 4c, voire même la figure 4a - subit au sein du premier échangeur 23 (RAS air/eau HT°) un premier échange thermique avec le liquide de refroidissement HT qui se trouve alors à une température de 90 à 130°C, voire 80 à 110°C (en supposant le moteur en régime thermique établi), avant de traverser le RAS air/eau BT 24 et y subir un deuxième échange thermique avec cette fois-ci le liquide de refroidissement d'une boucle BT qui se trouve alors active et à une température entre 40°C et 50°C pour, dans le second cas (figure 5b), subir un dernier échange thermique à travers l'évaporateur 25 avec le fluide réfrigérant pour atteindre une température comprise entre 20 et 25°C, sinon, dans le premier cas - cf. figure 5a -, sans ce troisième échange thermique pour pénétrer à l'intérieur des tubulures d'admission et des cylindres du moteur thermique 1.

La troisième configuration (cf. figure 5c) constitue un mode que prend le système notamment en phase de montée en température du moteur thermique 1: le boîtier 41 à échangeurs bi-étage entre les deux compresseurs 15, 15' adopte alors préférentiellement la configuration décrite par la figure 4d voire 4c et la configuration du répartiteur d'admission 40 permet de réchauffer l'air de suralimentation en lui faisant traverser le premier échangeur air de suralimentation/liquide de refroidissement HT 23. Afin que l'air de suralimentation ainsi réchauffé ne soit pas inutilement refroidi au sein des autres échangeurs (RAS air/eau BT 24 et évaporateur 25) et ruine ainsi l'effort apporté à le réchauffer au sein du premier échangeur 23, la boucle BT est alors ici inactive (par exemple en désactivant la pompe à eau électrique 20), ainsi que la dérivation associée du circuit réfrigérant 6 (vanne marche/arrêt 28 dédiée en position arrêt). L'air de suralimentation ne subit ainsi aucune déperdition thermique au sein du répartiteur 40 à la sortie du RAS air/eau HT 23 et pénètre, réchauffé, à l'intérieur des tubulures d'admission et des cylindres du moteur thermique 1.

Ce mode de fonctionnement est notamment mis en oeuvre:
- en phase de montée en température du moteur thermique 1 pour admettre dans la chambre de combustion un air plus chaud, favorable au bon déroulement de la combustion et à l'amorçage plus rapide des organes de dépollution;
- en phase de régénération du filtre à particules d'une motorisation diesel, afin de contribuer à augmenter la température des gaz d'échappement en entrée du filtre à particules; ou
- de façon transitoire lors de certaines conditions de roulage (température ambiante extérieure froide, vitesse véhicule modérée, faible charge moteur et hygrométrie élevée) favorisant le gel de condensats (gaz perdus dits de "blow-by" en anglais, vapeur d'eau contenue dans l'air extérieur et les gaz de recirculation) : le réchauffage de l'air d'admission ainsi prodigué permet ainsi de se prémunir de tout risque de gel de condensats.

La quatrième configuration (cf. figure 5d) est adoptée alors que, soit il n'est pas recommandé de réchauffer l'air de suralimentation, soit le circuit caloporteur HT 2 n'est pas encore à une température suffisamment élevée pour réchauffer l'air de suralimentation. Le boîtier 41 échangeurs bi-étages entre les deux compresseurs 15, 15' adopte alors préférentiellement la configuration décrite par la figure 4c : tous les échangeurs du boîtier 41 et du répartiteur d'admission 40 sont alors court-circuités et l'air de suralimentation est donc directement dirigé vers les tubulures d'admission et les cylindres du moteur thermique 1 sans subir aucun échange thermique au sein du boîtier 41 et du répartiteur 40.

Les cinquième et sixième configurations (cf. figure 5e et figure 5f) s'appliquent notamment en usage usuel lorsque le moteur 1 est en charge partielle: le premier échangeur air de suralimentation/liquide de refroidissement HT 23 doit être court-circuité afin de ne pas réchauffer l'air de suralimentation par le fluide HT et les gaz de recirculation nécessitent d'être refroidis: le deuxième échangeur air de suralimentation/liquide de refroidissement BT 24 est mis en oeuvre pour cette tâche, éventuellement assisté (selon la figure 5f) par l'évaporateur 25, si la température de l'air admis dans les cylindres le requiert. Le boîtier 41 échangeurs bi-étages entre les deux compresseurs 15, 15' adopte alors préférentiellement la configuration de la figure 4b, voire celle des figures 4c ou 4a.

La figure 5g montre qu'avantageusement, l'agencement des échangeurs (RAS air/eau HT 23 et BT 24, évaporateur 25) au sein du répartiteur d'admission 40 est réalisé afin de créer avec l'horizontale (en conditions véhicule, le répartiteur 40 monté sur le moteur thermique) un angle α, et par ailleurs la paroi inférieure du répartiteur 40 réalise elle-même avec cette horizontale un angle β. De plus, la paroi inférieure sur laquelle repose l'évaporateur 25 est percée de multiples orifices 64 évacuant vers la paroi inférieure du répartiteur 40 les condensats et est réalisée en un matériau hydrophile absorbant l'humidité et la restituant vers la paroi inférieure du répartiteur 40. Ces dispositions permettent de convoyer les condensats vers l'orifice 63 pratiqué en un point bas (en conditions véhicule) de la paroi inférieure du répartiteur 40, cet orifice 63 étant en communication avec un tuyau qui draine ces condensats hors du moteur thermique 1 et du sous-capot sans provoquer d'écoulement sur des composants sensibles du sous capot moteur (pièces électriques et électroniques).

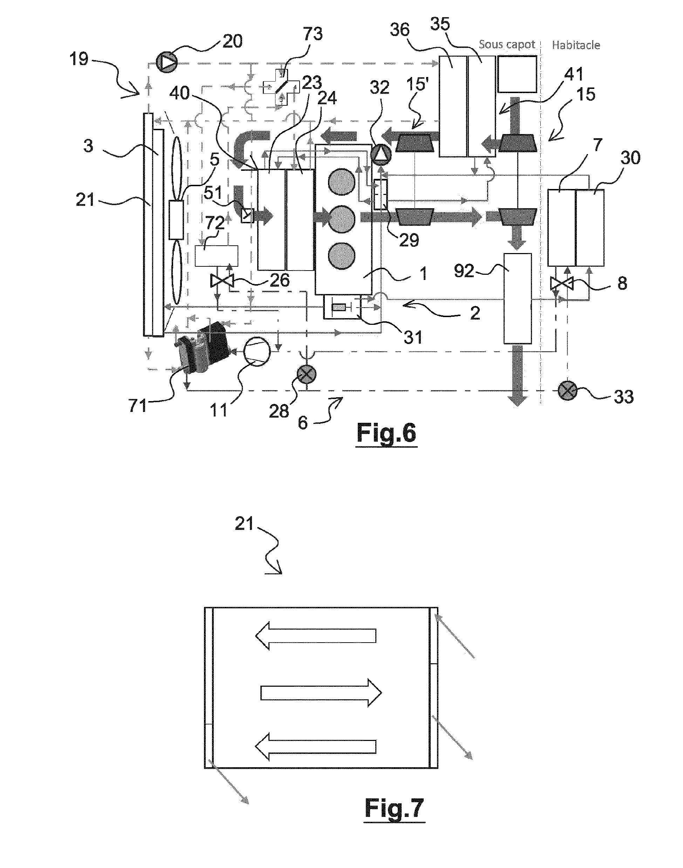

La figure 6 propose une architecture alternative à celle décrite en figure 3. En effet, l'architecture décrite en figure 3 engendre dans certaines configurations (celles notamment des figures 5a, 5b, 5e et 5f) un triple parcours dans le répartiteur d'admission 40, ce qui génère une résistance aéraulique élevée pour l'air d'admission. En outre, l'architecture décrite en figure 3 présente une assez faible capacité thermique requérant la mise en oeuvre du système de réfrigération (s'il n'est pas déjà actif pour réfrigérer l'habitacle) chaque fois qu'il est nécessaire de créer des frigories pour réfrigérer l'air de suralimentation à travers l'évaporateur 25. Par ailleurs, cette architecture met en oeuvre en face avant du véhicule trois échangeurs thermiques: condenseur 12 air/réfrigérant pour la climatisation, radiateur air/eau BT 21 pour le refroidissement de l'air de suralimentation et radiateur air/eau 3 pour le refroidissement du moteur thermique 1. Chaque échangeur est dimensionné pour répondre à leurs propres cas de vie, qui ne sont pas nécessairement les mêmes pour tous les échangeurs 3, 12, 21, ce qui conduit à un surdimensionnement global. L'agencement de ces échangeurs en face avant du véhicule génère une résistance aéraulique importante pour l'air traversant la calandre du véhicule et impacte le dimensionnement du ventilateur du groupe moto-ventilateur 5 et augmente le porte-à-faux avant du véhicule. Le fonctionnement du condenseur à air 12 génère en amont du radiateur BT 21 une température d'air supérieure à celle de l'air extérieur du fait de la puissance thermique dégagée par le condenseur 12, et nécessite donc un surdimensionnement associé du radiateur BT 21.

L'architecture proposée en figure 6 adopte un condenseur à eau 71 et élimine l'évaporateur 25 comme troisième échangeur thermique au sein du répartiteur d'admission 40. Le condenseur à eau 71 permet de décontraindre la façade aérothermique du véhicule (perméabilité aéraulique, dimensionnement aéraulique et électrique du GMV 5, la température d'air en amont du radiateur BT 21 est égale à celle de l'air extérieur), de réduire le porte-à-faux avant du véhicule et autorise un gain de place en sous-capot pour la protection choc piéton et un gain de réparabilité. Le condenseur à eau 71 nécessite une adaptation du radiateur BT 21. Ainsi, comme cela est visible sur la figure 7, le radiateur 21 est configuré pour faire circuler le liquide de refroidissement BT suivant au moins un passage supplémentaire dans l'échangeur 21 pour réaliser un sur-refroidissement du liquide BT et ainsi le sous-refroidissement du fluide réfrigérant au sein d'une partie du condenseur à eau 71. Une première partie du condenseur à eau 71 est ainsi connectée au circuit d'eau BT 19 décrit précédemment; tandis que la deuxième partie du condenseur à eau 71, qui réalise le sous-refroidissement du fluide réfrigérant est connectée au passage supplémentaire du liquide BT au sein du radiateur BT 21.

Par ailleurs, l'architecture de la figure 6 élimine l'évaporateur 25 du répartiteur d'admission 40 et mutualise le deuxième échangeur air/eau 24 pour réaliser au sein du répartiteur à la fois le refroidissement BT (fonction qu'il réalise déjà dans l'architecture de la figure 3) et le refroidissement TBT (Très Basse Température) de l'air de suralimentation, à la place de l'évaporateur 25.

A cette fin, le circuit réfrigérant 6 intègre, au lieu de l'évaporateur 25 implanté au sein du répartiteur d'admission 40, un refroidisseur 72 ou "chiller" en anglais (échangeur eau BT/réfrigérant) implanté de façon plus libre sur le circuit de refroidissement BT 19. Ce refroidisseur 72 (la vanne marche/arrêt 28 associée sur la dérivation dédiée du circuit réfrigérant étant en position marche) permet de produire, à partir du liquide BT (à une température comprise entre 20 et 50°C), un liquide TBT° (à une température comprise entre 10 et 30°C). Les frigories ainsi générées sont stockées au sein du liquide TBT dans le circuit BT 19, avec une capacité thermique supérieure à celle disponible via l'évaporateur 25 qui délivre ces frigories directement sur l'air. Cette configuration assure ainsi un refroidissement TBT de l'air de suralimentation.

Les prédispositions précédentes réduisent l'empreinte énergétique de la réfrigération de l'air de suralimentation du fait de la réduction du recours à la réfrigération dédiée à l'air de suralimentation par stockage capacitif de frigories. La capacité de stockage capacitif de frigories du circuit caloporteur TBT pourrait en alternative être améliorée par un dispositif de stockage enthalpique dédié, par exemple par chaleur sensible ou latente. En outre, l'abaissement de la température de l'air de suralimentation en amont de l'évaporateur 25 ou du RAS TBT 24 réduit la puissance thermique nécessaire pour produire en sortie de ces échangeurs un air de suralimentation à une température donnée (directement via le dimensionnement du compresseur 11 et du refroidisseur 72, et indirectement via le dimensionnement du GMV 5, du condenseur 71 et de la pompe à eau électrique 20.

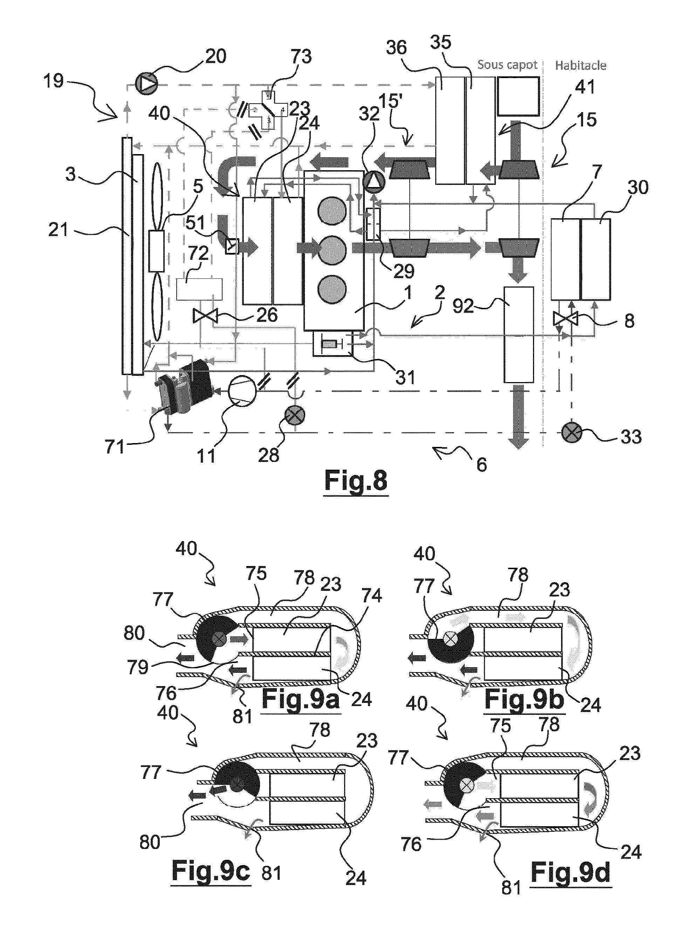

L'architecture proposée en figure 6 comporte une vanne quatre voies 73 qui connecte quand nécessaire, dans l'une de ses configurations (1 vers 2 puis 3 vers 4) le refroidisseur 72 au circuit BT 19: le fluide BT en sortie du radiateur BT 21 est propulsé, en parallèle du condenseur à eau 71 et de l'échangeur 36, à travers le refroidisseur 72, via le passage 1 vers 2 dans la vanne quatre voies 73, pour voir sa température diminuer avant son entrée, via le passage 3 vers 4 dans la vanne quatre voies 73, au sein du RAS air/eau TBT 24. Dans l'autre configuration de la vanne quatre voies (1 vers 4 et 2 vers 3) montrée en figure 8, la partie TBT du circuit BT 19 (qui inclue le refroidisseur 72) est désactivée par la configuration prise par la vanne, ainsi que la dérivation du circuit réfrigérant 6 comprenant le refroidisseur 72 (par la position arrêt de la vanne marche/arrêt 28 associée sur la dérivation dédiée du circuit réfrigérant). Cette configuration assure ainsi un refroidissement BT de l'air de suralimentation.

Les figures 9a à 9d présentent la configuration interne du répartiteur 40 d'air d'admission bi-étage qu'adopte l'architecture du système de thermo-management du groupe moto-propulseur décrite par les figures 6 et 8. Les deux échangeurs (RAS air/eau HT 23 et BT°/TBT 24) sont disposés sensiblement l'un au-dessus de l'autre à l'intérieur du répartiteur 40 et séparés par une paroi de celui-ci afin d'assurer les deux étapes du refroidissement de l'air de suralimentation et d'éviter que celui-ci court-circuite l'un ou l'autre des échangeurs 23, 24. Ainsi, dans au moins une des configurations du système, l'air de suralimentation traverse le premier échangeur 23 (irrigué par du liquide caloporteur HT) puis le deuxième 24 (traversé par le liquide BT ou TBT) en circulant dans le répartiteur 40 suivant un parcours en forme de U.

Les échangeurs air/eau HT 23 et BT/TBT 24 sont du même type que les échangeurs air/eau évoqués précédemment. De même que précédemment, l'étanchéité interne du répartiteur 40 est soignée entre les échangeurs 23, 24 et les parois du boîtier, notamment compte-tenu des niveaux de pressions de suralimentation évoqués, afin d'obliger l'air de suralimentation à traverser l'un et l'autre des échangeurs 23, 24 sans les court-circuiter dans un au moins une des configurations. Afin d'optimiser l'intégration de chaque échangeur air/eau 23, 24 à l'intérieur du répartiteur 40, la circulation du liquide de refroidissement au sein de chaque échangeur 23, 24 sera de type en U afin de disposer les embouts d'entrée et de sortie de fluide caloporteur du même côté de chaque échangeur 23, 24. Cela permet ainsi, lors de l'assemblage des différents composants du répartiteur 40, d'insérer par translation chaque échangeur 23, 24 à l'intérieur du corps du répartiteur 40 par le côté. Cette technique de montage permet également d'optimiser la mise en oeuvre des différents niveaux d'étanchéité (vers l'extérieur et entre le boîtier du répartiteur 40 et les échangeurs 23, 24).

En plus des deux RAS HT 23 et BT/TBT 24 disposés de sorte que dans au moins une des configurations du système, l'air de suralimentation effectue un trajet en forme de U à travers lesdits échangeurs, le répartiteur 40 met en oeuvre de façon analogue au boîtier 41 abritant les deux échangeurs HT 35 et BT 36:
- une paroi 74 disposée entre les deux échangeurs 23, 24, réalisant l'étanchéité à l'air de suralimentation et l'isolation thermique entre les deux échangeurs 23, 24 situés chacun à l'intérieur d'un conduit 75, 76;
- une vanne distributrice 77;
- un troisième conduit 78 de court-circuit de l'échangeur 23;
- une paroi 79 disposée entre la vanne distributrice 77 et le conduit 76 où est disposé l'échangeur 24 air de suralimentation/liquide de refroidissement BT°;
- un quatrième conduit 80 de court-circuit des deux échangeurs 23, 24 et du troisième conduit 78;
- un orifice 81 pratiqué en un point bas du répartiteur 40 en aval des échangeurs 23, 24 en communication avec un tuyau (non représenté), évacuant les condensats du répartiteur 40 et les drainant hors du moteur et du sous capot, loin des composants sensibles, lors du fonctionnement et hors du fonctionnement du moteur thermique 1.

La vanne distributrice 77 et les dispositifs précités autorisent la circulation de l'air de suralimentation et des gaz de recirculation à l'intérieur du répartiteur d'admission 40 selon chacune des configurations suivantes.

Dans une première configuration montrée à la figure 9a, la vanne distributrice 77 prend une position telle que les passages des gaz de suralimentation entrant dans le répartiteur 40 vers les troisième 78 et quatrième 80 conduits sont obstrués: ces gaz ne peuvent donc emprunter que le premier conduit 75 qui leur fait traverser le RAS HT 23 puis le deuxième conduit 76 et le RAS BT/TBT 24.

Dans une deuxième configuration montrée à la figure 9b, la vanne distributrice 77 prend une position telle que les passages des gaz de suralimentation entrant dans le répartiteur 40 vers les premier 75 et quatrième 80 conduits sont obstrués: ces gaz ne peuvent donc emprunter que le troisième conduit 78 qui leur fait court-circuiter le RAS HT 23 et les amène en entrée du deuxième conduit 76 pour traverser le RAS BT/TBT 24.

Dans une troisième configuration montrée à la figure 9c, la vanne distributrice 77 prend une position telle que les passages des gaz de suralimentation entrant dans le répartiteur 40 vers les premier 75 et troisième 78 conduits sont obstrués: ces gaz ne peuvent donc emprunter que le quatrième conduit 80 et sont donc dirigés par la vanne distributrice 77 directement vers la sortie du boîtier du répartiteur 40 et les chambres de combustion du moteur thermique 1, sans traverser aucun des deux échangeurs 23 et 24.

Par la quatrième configuration montrée à la figure 9d telle que la position prise par la vanne distributrice 77 est identique à celle prise dans la première configuration, le système permet de réchauffer l'air de suralimentation à travers le RAS HT 23, le RAS BT 24 étant désactivé. La vanne quatre voies 73 se trouve alors dans sa deuxième configuration (1 vers 4 et 2 vers 3), tandis que la vanne marche/arrêt 28 du circuit réfrigérant 6 est en position arrêt.

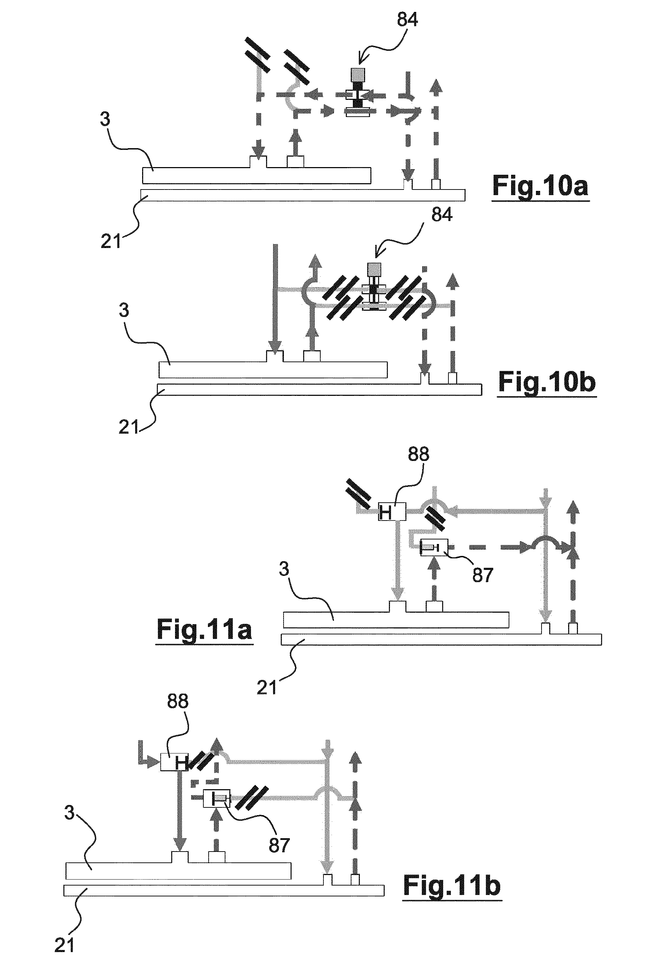

Une variante permet d'augmenter le potentiel de refroidissement du fluide BT en entrée du RAS BT 24 grâce à la disponibilité mise à profit, en plus du radiateur BT 21, du radiateur HT 3 lorsque le thermostat 31 du moteur thermique 1 est fermé. En effet, tant que le thermostat 31 du moteur thermique 1 est fermé, le radiateur HT 3, destiné à refroidir le moteur thermique 1 (et dans certains cas la boîte de vitesses, en particulier s'il s'agit d'une boîte automatisée), donc de grandes dimensions, n'est pas utilisé. L'architecture décrite par les figures 10a et 10b illustre ce procédé de couplage du radiateur HT 3 au circuit BT 19.

La figure 10a décrit la configuration prise tant que le thermostat 31 du moteur thermique est fermé et donc le radiateur HT 3 disponible. Une vanne 84, de type pilotée par un solénoïde ou de type papillon ou thermostatique (dans ce cas commandée par la température du fluide HT en sortie du moteur thermique 1), commande le couplage (si elle est ouverte, comme en figure 10a) ou non (si elle est fermée comme en figure10b) du radiateur HT 3 au circuit BT 19. Dans la configuration du système telle que décrite par la figure 10a, la pompe électrique 20 aspire le fluide BT en sortie du radiateur BT 21 et, grâce à l'ouverture de la vanne 84 le propulse en sortie du radiateur HT 3 et à l'intérieur du RAS BT 24. A sa sortie, le fluide BT est dirigé en entrée du radiateur BT 21 et, grâce à l'ouverture de la vanne 84, sur le tuyau d'entrée du radiateur HT 3. Le thermostat 31 du moteur thermique 1 étant fermé, la partie du débit de fluide BT ayant emprunté la voie libérée par la position prise par la vanne 84 vers le circuit HT 2 sur le tuyau d'entrée du radiateur HT 3 est totalement dirigée vers le radiateur HT 3. Le fluide caloporteur BT entrant dans le radiateur HT 3 emprunte le faisceau à travers lequel il cède à l'air extérieur les calories préalablement absorbées à la traversée du RAS BT 24. A sa sortie, le fluide BT sortant du radiateur HT 3 ne peut se diriger vers le moteur thermique 1 car cette voie ne lui offre aucune issue, le thermostat 31 étant fermé. Par conséquent, le fluide BT sortant du radiateur HT 3, aspiré par la pompe électrique BT 20 à travers la vanne ouverte 84, rejoint à son entrée la portion de fluide BT ayant de son côté traversé le radiateur BT 21.

Ainsi, la configuration décrite par la figure 10a permet d'utiliser le radiateur 3 du circuit HT 2, non utilisé car le thermostat 31 du moteur thermique 1 est fermé, pour apporter au circuit BT 19 un potentiel supplémentaire de refroidissement par l'association en parallèle des radiateurs BT 21 et HT 3. Peu avant l'ouverture du thermostat 31 du moteur thermique (par exemple 5°C avant la température du début d'ouverture du thermostat 31), la vanne 84 se ferme, conformément à la figure10b. En condamnant le passage du fluide BT vers le circuit HT 2, elle rétablit alors la configuration du système telle que décrite par les figures 3, 6 ou 8, dans laquelle le radiateur HT 3 est dissocié du circuit BT 19.

Les figures 11 a et 11 b constituent une architecture alternative à celle décrite par les figures 10a et 10b, en mettant avantageusement en oeuvre des actionneurs passifs. Cette architecture réalise le couplage des circuits HT 2 et BT 19 par la mise en oeuvre, d'une part d'un thermostat 87 entre les tuyaux de sortie des radiateurs HT 3 et BT 21, et d'autre part d'un clapet pressostatique 88 entre les tuyaux d'entrée des radiateurs HT 3 et BT 21.

Dans la configuration montrée à la figure 11a, le thermostat 31 du moteur thermique 1 est fermé et donc le radiateur HT disponible. Le thermostat moteur 1 étant fermé et la pompe à eau électrique 20 du circuit BT étant active, le clapet pressostatique 88 adopte une position libérant le passage au fluide BT vers le radiateur HT 3, en sortie duquel le fluide BT traverse le thermostat secondaire 87 sans en provoquer l'ouverture, sa température étant insuffisante. Le fluide en sortie du radiateur HT 3 rejoint alors le fluide en sortie du radiateur BT 21, réalisant ainsi la mise en parallèle des radiateurs HT 3 et BT 21 et la mise à disposition du radiateur HT 3 pour le refroidissement du fluide BT.

La figure 11b décrit la configuration prise par le système lors du début d'ouverture du thermostat moteur 1. La différence de pression aux bornes du clapet pressostatique 88 provoque la fermeture de la communication entre les tuyaux d'entrée des radiateurs HT 3 et BT 21. Le radiateur HT 3 est donc traversé par le fluide HT uniquement. En sortie de cet échangeur, la température du fluide est suffisamment élevée pour provoquer l'ouverture du thermostat secondaire 87, dont le seuil d'ouverture a été choisi en conséquence, et par conséquent pour réaliser la séparation des circuits HT 2 et BT 19.

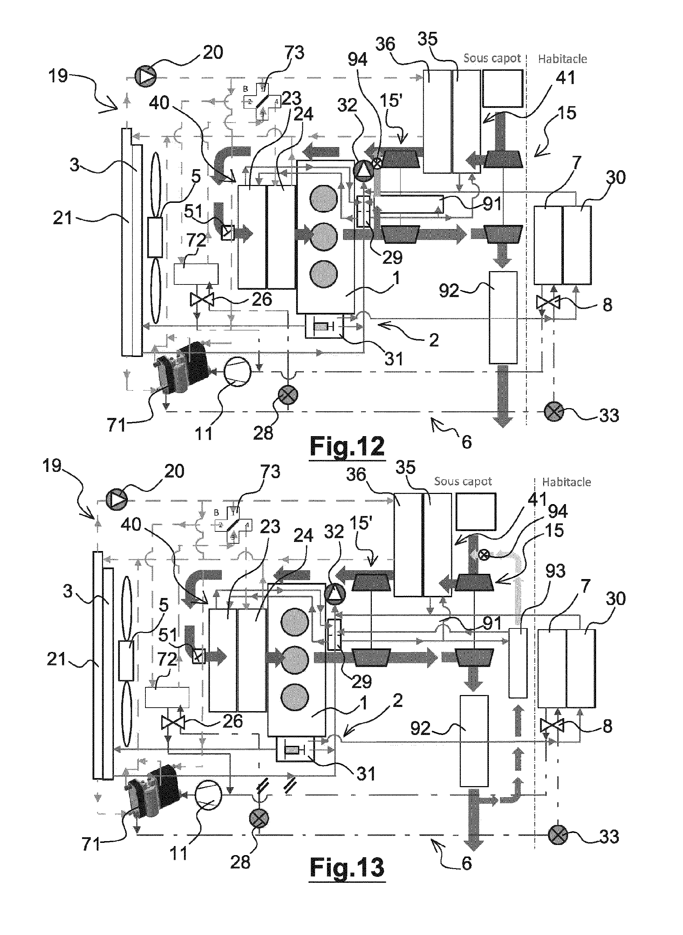

Les figures 12 et 13 présentent des architectures de thermomanagement des gaz de suralimentation avec des gaz de de recirculation refroidis. Dans l'architecture de la figure 12, les gaz de recirculation (EGR) haute pression (HP) sont prélevés, via l'échangeur 91, en amont de la turbine de l'étage 15' et introduits en amont des RAS 23, 24 et en aval du compresseur 15'. En variante, les gaz EGR sont introduits en interne du répartiteur d'admission 40 en aval des échangeurs 23, 24 mentionnés. Selon une autre alternative, le passage des gaz EGR s'effectue par une traversée de la culasse du moteur thermique 1.

Dans l'architecture de la figure 13, les gaz de recirculation basse pression (BP) sont prélevés en aval des organes de post-traitement 92, via l'échangeur 93, et introduits en amont du premier compresseur de l'étage 15. En variante, les gaz sont prélevés en amont du post-traitement 92, mais en aval de la turbine de l'étage 15.

Dans les deux cas, la vanne EGR 94 est disposée du côté froid pour en ménager le dimensionnement. Le refroidissement des gaz de recirculation est réalisé par les échangeurs 91, 93 disposés sur le circuit HT 2 par la même dérivation 29 que celle alimentant l'échangeur 35 et le RAS HT 23. Dans l'architecture décrite par la figure 12, les échangeurs 23 et 24 assurent également le refroidissement des gaz de suralimentation tandis que dans le cadre de l'architecture décrite par la figure 13, les échangeurs HT 35 et BT 36, en plus des échangeurs 23 et 24, assurent également le refroidissement des gaz de recirculation. La variante combinant les deux architectures des figures 12 et 13 et les deux architectures de recirculation des gaz EGR HP et BP sur le même groupe moto-propulseur entre également dans le cadre de la présente invention.

L'invention permet ainsi d'obtenir notamment:
- un gain de puissance moteur par refroidissement accru de l'air de suralimentation (ou à iso-puissance moteur, une réduction de la cylindrée du moteur et de ses composants d'adaptation),
- un gain de consommation important lié à la réduction de cylindrée extrême, qui autorise une réduction du régime de rotation du moteur thermique et une augmentation de couple importants par allongement des démultiplications,
- un gain en consommation supplémentaire attendu en usage réel par l'abaissement des contraintes thermiques sur le moteur: cliquetis, suppression d'enrichissement forte charge via abaissement de la température de combustion,
- un gain en dépollution (oxydes d'azote et particules),
- un gain en brio moteur par la réduction du volume d'air entre la sortie du compresseur et l'admission d'air dans la chambre de combustion et par une plus grande inertie thermique du système d'admission d'air (meilleure efficacité du système à basses vitesses véhicule),
- une amélioration du rendement d'architecture en implantation sous capot,
- une augmentation du taux de gaz de recirculation, dit taux EGR, admissible par le moteur thermique ou permettre un taux donné de gaz de recirculation sur un champ moteur plus large,
- une inhibition du risque de dégradation des performances du moteur par encrassement du RAS ou gel des condensats dans le RAS,
- une amélioration de l'homogénéité de la température de l'air admis dans les cylindres, permettant une amélioration du comportement au cliquetis et une optimisation de l'allumage pour améliorer encore la consommation en carburant,
- une inhibition des ratages de régénération du filtre à particules,
- une accélération de la montée en température du moteur thermique procurant un gain indirect en consommation, en dépollution et en thermique habitacle,
- un gain en coût et en masse.

## Revendications

1. Module d'admission d'air d'un moteur à combustion interne (1) de véhicule automobile comportant au moins deux étages de suralimentation (15, 15') en air dudit moteur à combustion interne (1), **caractérisé en ce qu'**il comporte en outre:
- des moyens (23) assurant un premier échange thermique avec l'air de suralimentation via un circuit caloporteur haute température (2) du moteur à combustion interne (1) de manière à faire passer l'air de suralimentation d'une température supérieure ou égale à 150 degrés Celsius à une température située dans une première plage de valeurs de températures;
- des moyens (24) assurant un deuxième échange thermique avec l'air de suralimentation via un circuit caloporteur basse température (19) de manière à réduire la température de l'air de suralimentation dans une deuxième plage de valeurs de températures, et
- des moyens (25) assurant un troisième échange thermique de manière à réduire la température de l'air de suralimentation dans une troisième plage de valeurs de température, avant son admission dans les chambres de combustion du moteur à combustion interne (1).

2. Module selon la revendication 1, **caractérisé en ce que**:
- la première plage de valeurs de température des gaz de suralimentation est comprise entre 90 et 130 degrés Celsius,
- la deuxième plage de valeurs de température des gaz de suralimentation est comprise entre 40 et 50 degrés Celsius,
- la troisième plage de valeurs de température des gaz de suralimentation est comprise entre 20 et 25 degrés Celsius, voire en-dessous selon les conditions de fonctionnement du moteur à combustion interne (1), du véhicule automobile, et les conditions extérieures.

3. Module selon l'une quelconque des revendications 1 ou 2, **caractérisé en ce que**
- les moyens assurant le premier échange thermique sont formés par un premier échangeur (23) entre l'air de suralimentation et un liquide de refroidissement du circuit caloporteur haute température (2),
- les moyens assurant le deuxième échange thermique sont formés par un deuxième échangeur (24) entre l'air de suralimentation et un liquide de refroidissement du circuit caloporteur basse température (19), et
- les moyens assurant le troisième échange thermique sont formés par un troisième échangeur constitué par un évaporateur (25) associé à un circuit de réfrigération (6) du véhicule automobile.

4. Module selon la revendication 3, **caractérisé en ce que** l'évaporateur (25) assurant le troisième échange thermique est disposé sur le circuit de réfrigération (6) en parallèle d'un autre évaporateur (7) situé dans un habitacle du véhicule automobile.

5. Module selon la revendication 4, **caractérisé en ce que** le circuit de réfrigération (6) comportant une première branche reliée à l'évaporateur (7) de l'habitacle et une deuxième branche reliée à l'évaporateur (25) refroidissant l'air de suralimentation, une vanne marche/arrêt (28, 33) est disposée sur chacune des branches.

6. Module selon l'une quelconque des revendications 3 à 5, **caractérisé en ce que** le raccordement du premier échangeur (23) au circuit caloporteur haute température (2) du moteur à combustion interne (1) est réalisé sur une dérivation (29) pratiquée dans un conduit de court-circuit interne du moteur à combustion interne (1) en amont d'un retour d'un aérotherme (30).

7. Module selon la revendication 6, **caractérisé en ce que** le circuit du liquide de refroidissement haute température (2) du moteur à combustion interne (1) comprend une boucle qui comporte le premier échangeur (23) entre l'air de suralimentation et un liquide de refroidissement du circuit caloporteur haute température (2), et dont l'entrée est disposée en aval de la jonction de la branche de refroidissement et d'un conduit de court-circuit interne du moteur (1), la branche de refroidissement comprenant un radiateur haute température (3) adapté à refroidir le liquide de refroidissement sortant du moteur (1), et le conduit de court-circuit interne du moteur (1) court-circuitant également ce radiateur (3).

8. Module selon l'une quelconque des revendications 6 et 7, **caractérisé en ce que** l'entrée de la boucle comportant le premier échangeur (23) entre l'air de suralimentation et le liquide de refroidissement du circuit caloporteur haute température (2) est disposée en amont d'une pompe (32) adaptée à faire circuler le liquide de refroidissement du moteur à combustion interne (1).

9. Module selon l'une quelconque des revendications 6 à 8, **caractérisé en ce que** l'entrée de la boucle comportant le premier échangeur (23) entre l'air de suralimentation et le liquide de refroidissement du circuit caloporteur haute température (2) est disposée en amont de la sortie d'une boucle d'aérotherme dans laquelle le liquide de refroidissement en sortie du moteur à combustion interne (1) traverse un aérotherme (30).

10. Module selon l'une quelconque des revendications 3 à 9, **caractérisé en ce que** les trois échangeurs (23, 24, 25) sont disposés sensiblement les uns au-dessus des autres à l'intérieur d'un répartiteur d'admission d'air (40) et sont séparés par des parois pour assurer les différentes étapes du refroidissement de l'air de suralimentation et pour isoler thermiquement chaque échangeur (23, 24, 25) l'un de l'autre.
